# EUROPÄISCHE PATENTSCHRIFT

(11) **EP 1 894 043 B1**
(45) Veröffentlichungstag und Bekanntmachung des Hinweises auf die Patenterteilung: **05.11.2008**
(21) Anmeldenummer: 06762106.0
(22) Anmeldetag: 21.06.2006
(51) Int. Cl.: G02B 5/122, G02B 5/18, G01V 8/14, E01F 9/015

(54) **LICHT REFLEKTIERENDES TRIPEL, REFLEKTOR SOWIE VERFAHREN ZUR ERKENNUNG EINES GEGENSTANDS**
TRIPLE PRISM WHICH REFLECTS LIGHT, REFLECTOR AND METHOD FOR RECOGNISING AN OBJECT
PRISME TRIPLE REFLECHISSANT LA LUMIERE, REFLECTEUR ET PROCEDE D'IDENTIFICATION D'UN OBJET

(30) Priorität: 23.06.2005 DE 102005063331
(43) Veröffentlichungstag der Anmeldung: 05.03.2008
(73) Patentinhaber: IMOS Gubela GmbH, 77871 Renchen (DE)
(72) Erfinder: GUBELA, SEN., Hans-Erich, 77887 Sasbachwalden (DE); GUBELA, JUN., Hans-Erich, 77887 Sasbachwalden (DE); HUBER, Markus Erwin, 77887 Sasbachwalden (DE); WEINGÄRTNER, Simon, 77876 Kappelrodeck (DE)
(74) Vertreter: Reule, Hanspeter
(86) Internationale Anmeldenummer: PCT/EP2006/005932
(87) Internationale Veröffentlichungsnummer: WO 2006/136381

(56) Entgegenhaltungen:
- EP-A2- 0 476 361
- US-A- 5 866 236
- US-B1- 6 353 489

## Beschreibung

Die Erfindung betrifft einen Reflektor, der aus einem oder einer Vielzahl von Tripeln besteht und bevorzugt für die Verwendung in der Sensorik gestaltet ist, jedoch auch für den Straßenverkehr und ähnliche Signalaufgaben Vorteile zeigt.

In der Sensorik werden Reflexions-Lichtschranken verwendet, bei denen meist Sender und Empfänger des ausgesandten Lichtsignals in einem Gehäuse sind und das ausgesandte Licht auf einen Reflektor fällt, der das Licht in Richtung der Lichtquelle reflektiert. Um sicher zu gehen, das das empfangene Licht tatsächlich vom Reflektor stammt und nicht von einer anderen Lichtquelle oder zufälligen Reflexion durch einen anderen Gegenstand, verwendet man bevorzugt polarisiertes Licht. Das polarisierte Licht wird in einem aus Tripeln gebildeten Reflektor gedreht und zum Empfänger reflektiert. Durch die Lage der Polarisation lässt sich das Lichtsignal als vom Tripelreflektor stammend identifizieren. Diese Sicherheitseinrichtung durch Auswertung der Polarisationsrichtung des reflektierten Lichtes wird heute oft wirkungslos, weil auch Verpackungsfolien zum Beispiel auf Paketen zufällige Polarisationsrichtungen von Fremdlicht erzeugen können. Hinzu kommt, dass Sicherheitskleidung von Personen oft mit reflektierenden Flächen versehen ist, die aus kleinen Tripeln gebildet sind. Diese vermögen ebenfalls das von der Lichtschranke ausgesendete Licht zu drehen, so dass der Empfänger in der Lichtschranke getäuscht wird. Es besteht kaum noch Sicherheit, dass das empfangene Lichtsignal tatsächlich vom angepeilten Reflektor stammt.

Die Aufgabe der Erfindung ist die Schaffung eines Sensorsystems, das bei Verwendung eines Reflektors sicher stellt, dass das empfangene Signal tatsächlich von dem angepeilten Reflektor stammt. Zusätzlich soll der Reflektor auch die bisherige Polarisationsdrehung ermöglichen, um auch die herkömmliche Detektionsmethode weiter anwenden zu können.

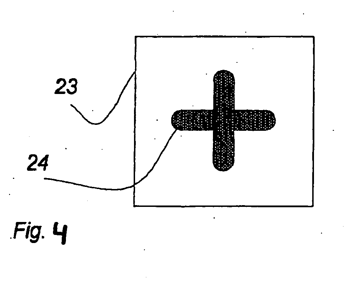

Um diese neue Sensorik zur Beobachtung von Projektionen anwenden zu können, wird ein erfindungsgemäßer Reflektor vorgeschlagen, der als Reflexion das von der Sensorik eingetroffene Signal modifizieren kann. Dieses modifizierte Signal kann bei Verwendung der Diffraktionsmethode (Fig. 4 bis Fig. 7) sogar eine beliebige, bevorzugt punktsymmetrische Figur projizieren.

Das Verfahren für die Sensorik.

Der Sender der Sensorik in Funktion einer Lichtschranke sendet ein Lichtstrahlbündel (Lichteingangssignal) mit zum Beispiel 5 mm Durchmesser. Der erfindungsgemäße Reflektor antwortet nun mit einem modifizierten Lichtausgangssignal, das eine deutlich erkennbare Projektion erzeugt, die der Empfänger im Sensor auswerten kann. Die Auswertung der vom Empfänger der Sensorik erhaltenen Projektion kann einfach über einen preiswerten Kamerachip erfolgen mit einer geringen Zahl von Pixeln oder einfach über die Anordnung mehrerer einzelner Empfangselemente.

Das erfindungsgemäße Verfahren für die Sensorik ist, die Projektion zu empfangen und zweckmäßig zugleich mit mindestens einem Pixel oder einem Empfangselement zusätzlich zu prüfen, ob außerhalb der erwarteten Projektion ein Lichtsignal empfangen wird. Wenn das nämlich der Fall ist, dann erkennt die Sensorik, dass ein Fremdlicht oder eine fremde Reflexion vorliegt. Dieses Prinzip der gleichzeitigen Positivprüfung, nämlich die erwartete Projektion zu empfangen, und der zusätzlichen Negativprüfung, nämlich eine Störung durch Fremdlicht außerhalb der erwarteten Projektion zu beobachten, wo kein Licht eintreffen darf, macht das Verfahren für die Sensorik so zuverlässig sicher.

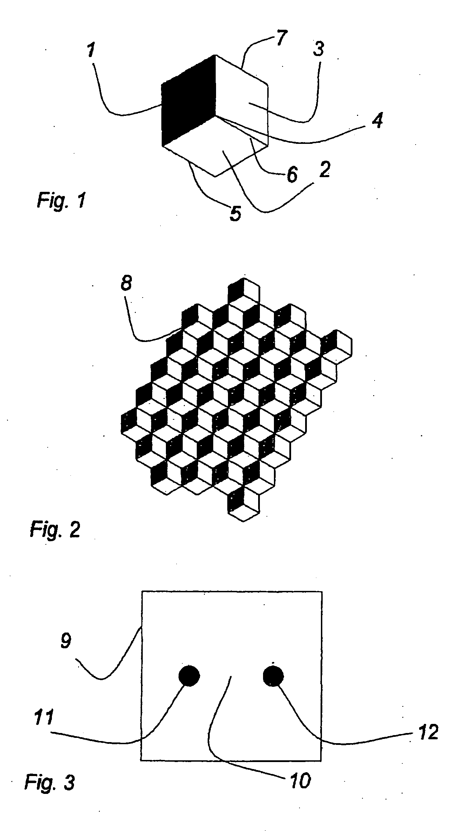

Nachfolgend wird am wiederkehrenden Beispiel der Winkelmethode (Fig. 1 bis Fig. 3) eine einfache Projektion von zwei Punkten gewählt, um Details erläutern zu können.

Der Größe der Projektion ist abhängig vom Abstand der Projektionsfläche, also des Empfängers der Sensorik, weil das modifizierte Lichtausgangssignal auf Winkelfunktionen der Spiegelflächen im Tripel beruht. Aber für den praktischen Einsatz von Lichtschranken über einen Beobachtungsabstand von etwa 4 m genügt zum Beispiel für die Projektion zweier Punkte bereits eine im Reflektor verwendete geringe Winkelabweichung vom Rechten Winkel zweier Teilflächen 2 und 3 des Tripels zueinander. So dass in diesem Beispiel zwei deutlich getrennte Punkte projiziert werden.

Die drei Teilflächen, die einen Tripel bilden, werden hier nachfolgend Spiegel bzw. Spiegelflächen genannt. Die erforderliche Winkelabweichung vom Rechten Winkel der zweiten und dritten Spiegelfächen 2 und 3 zueinander ist bereits bei etwa 2 bis 120 Bogenminuten als gleichartige positive oder negative Abweichung vom Rechten Winkel deutlich wirksam.

Der erfindungsgemäße Reflektor.

Es wird ein Reflektor vorgeschlagen, der das von der Lichtquelle auf ihn treffende Lichtsignal modifiziert und in Richtung zum Empfänger des Sensors reflektiert.

Der Kerngedanke des erfindungsgemäßen Reflektors ist also, ein auf den Reflektor einfallendes Lichteingangssignal so zu verändern, dass der Reflektor mit einer modifizierten Projektion (Lichtausgangssignal) antwortet. Diese Eigenschaft ermöglicht dem Verfahren zur Sensorik zu prüfen, ob das empfangene Lichtsignal in seiner Form dem erwarteten Signal entspricht oder davon abweicht.

Der Reflektor besteht aus einem Tripel (Fig. 1) oder vorzugsweise aus einem Tripelarray (Fig. 2). Das Tripelarray ermöglicht die Herstellung einer größeren Reflexfläche, die über ihre gesamte Fläche die gleichartige Wirkung zeigt.

Außerdem kann das Tripelarray aus zueinander verdrehten Tripeln oder Reihen von Tripeln zusammengefügt werden, wenn bei großflächiger Beleuchtung von Tripeln unterschiedlicher Stellung das modifizierte Signal in unterschiedlichen Stellungen projiziert werden soll. So würden dann zum Beispiel zwei oder drei modifizierte Signale oder Signalfiguren entsprechend der Tripelstellungen zueinander verdreht projiziert werden.

Als Form des Tripels können nahezu alle bekannten Reflexionstripel verwendet werden. Es sind aber die Tripelformen zu bevorzugen, die dem kubischen Tripel (Fig. 1) besonders nahe kommen, damit möglichst wenige Störstrahlen entstehen, die die Darstellung oder Erkennung des Doppelsignals durch zusätzliche Lichtsignale stören könnten. Dagegen würde zum Beispiel durch die Verwendung eines pyramidalen Tripelarrays das Doppelsignal mehrfach abgebildet werden.

Der erfindungsgemäße Reflektor ist auch im Straßenverkehr sehr gut verwendbar. Ermöglicht er doch, das einfallende Scheinwerferlicht hervorragend in mehrere Richtungen zugleich zu senden. So kann der Reflektor so angeordnet werden, dass der Fahrer eines niedrigen Personenkraftwagens und zugleich der Fahrer eines hohen Lastkraftwagens den Reflektor deutlicher erkennt durch die gewählte Gestalt der Lichtprojektion des Reflektors.

Bei Tripelarrays, die aus verschieden gedrehten Tripeln zusammengefügt sind oder aus erfindungsgemäßen Tripeln mit unterschiedlichen Öffnungswinkeln der zweiten und dritten Spiegelfläche 2 und 3 versehen sind, kann eine gezielte Lichtverteilung erfolgen.

Im Folgenden wird die Erfindung anhand der in der Zeichnung schematisch dargestellten Ausführungsbeispiele näher erläutert:
Die Fig. 1 bis Fig. 3 veranschaulichen die Winkelmethode.
Die Fig. 4 bis Fig. 7 veranschaulichen die Diffraktionsmethode.

Mittels der Figuren lassen sich die unterschiedlichen Ausbildungen des erfindungsgemäßen Reflektors und des dazu gehörigen Verfahrens für die Sensorik nachfolgend erläutern.

Es zeigt die
Fig. 1 einen so genannten Fullcube-Tripel, der in der Idealform aus drei quadratischen Teilflächen, nämlich der ersten, der zweiten und der dritten Spiegelfläche 1, 2, 3 bestehen würde mit dem Tripelzentrum 4. In der Idealform würden die drei Spiegel zueinander im Rechten Winkel stehen. Der erfindungsgemäße Reflektor weicht davon ab.
   Die zweite und die dritte Spiegelfläche 2 und 3 bilden einen Öffnungswinkel von größer oder kleiner 90°, bevorzugt von größer 90°. Sie stehen aber im Rechten Winkel zur ersten Spiegelfläche 1. In der Fertigungspraxis gibt es natürlich Toleranzen, so dass der hier bezeichnete Rechte Winkel geringfügig abweichen könnte.
   Die Kanten 5 und 6 begrenzen die zweite Spiegelfläche 2, die Kanten 6 und 7 begrenzen die dritte Spiegelfläche 3.
Fig. 2 zeigt ein Tripelarray, gebildet aus den Tripeln der Fig. 1. Dieses Tripelarray hat den Vorzug, eine große Fläche für das auftreffende Lichtsignal bereit zu stellen. Wird zum Beispiel ein Laserlicht verwendet, das über größere Entfernungen schwer auszurichten ist, so bietet das Tripelarray eine vergrößerte Zielfläche. Da in diesem Beispiel alle Tripel von gleicher Beschaffenheit sind, wird das Tripelarray immer gleichartig das Licht modifizieren und reflektieren unabhängig davon, wo der Laserstrahl auf dem Tripelarray auftrifft.
Fig. 3 zeigt eine Lichtempfangsfläche 9 für das reflektierte Licht und eine beispielhafte Projektion des vom Reflektor erzeugten Doppelsignals. Angenommen wird, dass hinter der teiltransparenten Lichtempfangsfläche 9 im Zentrum 10 ein Lichtsender angeordnet ist, der zum Beispiel kohärentes Licht in Form eines kreisrunden Lichtstrahles zum erfindungsgemäßen Reflektor sendet. Der Reflektor beantwortet nun dieses Lichteingangssignal mit zwei deutlich getrennten Lichtzentren 11 und 12 als Lichtausgangssignal, die er auf die Lichtempfangsfläche projiziert.

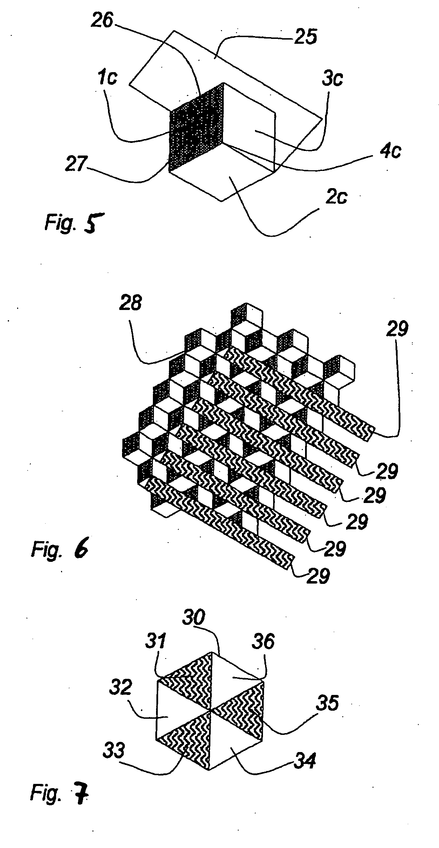

Fig. 4 zeigt eine Projektionsfläche 23, auf der ein durch die erfindungsgemäße Diffraktionsmethode erzeugtes Kreuzsymbol 24 erscheint. Allerdings muss dazu das vom Sensor ausgesandte Licht kohärent sein. Mittels der Diffraktion können nun nahezu alle denkbaren Projektionsmuster erzeugt werden. Aber auch hier ist für die Gestaltung des Reflektors eine weitere erfindungsgemäße Lehre zu beachten, die in Fig. 5 erläutert wird.
Fig. 5 zeigt einen Fullcube-Tripel mit einer ersten, einer zweiten und einer dritten Spiegelfläche 1c, 2c und 3c. Alle Spiegel stehen in diesem Beispiel zueinander im Rechten Winkel. Die Spiegel können aber auch andere Winkel oder Formate besitzen. Für die Erläuterung der erfindungsgemäßen Diffraktionsmethode sind die Tripelvariationen hier nicht von Bedeutung.

Eine transparente Folie 25 liegt über der Lichteintrittsfläche des Tripels und bedeckt ihn zu 50%. Auf die Kennzeichnung des Diffraktionsmusters in der Folie wird hier verzichtet, um die Darstellung für den Leser durchsichtig zu halten.

Der erste Spiegel 1c ist zur Hälfte abgedeckt, der zweite Spiegel 2c liegt frei und der dritte Spiegel 3c ist vollständig von der beispielhaften Folie abgedeckt. Diese transparente Folie enthält eine diffraktive Struktur mit einer Pixelgröße von beispielhaft 10 bis 60 Mikrometer. Der Sensor sendet ein kohärentes Lichtbündel zum Tripel. Das auf den Tripel eintreffende Licht, davon 50%, trifft auf die diffraktive Struktur, dringt in den Glaskörper des Tripels ein, trifft auf die abgedeckte Spiegelteilfläche 26 des ersten Spiegels 1c oder den dritten Spiegel 3c und wird über alle drei Spiegel laufend retroflektiert. Das Licht verlässt den Tripel über die nicht abgedeckte Spiegelteilfläche 27 des ersten Spiegels 1c oder den zweiten Spiegel 2c, welcher nicht von der beispielhaften Folie abgedeckt ist.

Weitere 50% des vom Sensor eintreffenden Lichtes trifft auf die von der Folie nicht abgedeckte Spiegelteilfläche 27 und den zweiten Spiegel 2c und verlässt den Tripel über jene Spiegelteilfläche 26 und Spiegel 3c, die von der Folie abgedeckt sind.

Bei allen sechs möglichen Lichtwegen durchläuft das Licht die diffraktive Struktur nur einmal, obwohl es im Tripel über drei Spiegel läuft. Nur mit der Regel, dass das Licht die diffraktive Struktur nur einmal durchdringt, ist eine saubere Projektion wie in Fig. 4 möglich.

Würde die Abdeckung des Tripels größer gewählt, kommt es zu Unschärfen bis schließlich zur Projektion ausschließlich diffusen Lichtes. Wird die Abdeckung kleiner als 50% der Lichteintrittsfläche des Tripels gewählt, dann nimmt weniger eingestrahltes Sensorlicht an der Diffraktion teil und es entsteht zu der Projektion der in der Diffraktion enthaltenen Figur ein störender Lichtfleck oder eine Überstrahlung durch nicht-diffraktiv beeinflusstes Licht.

Anstelle einer Diffraktionsfolie 25 kann auch die diffraktive Struktur direkt auf die Lichteintrittsfläche des Tripels abgeformt werden, indem die diffraktive Struktur direkt in die Oberfläche der Kunststoffspritzgussform eingebracht ist.

Das kann durch Einlegen einer Nickelabformung in die Form erfolgen. Die praktische Anwendung der erfindungsgemäßen Diffraktionsmethode für Kunststoffreflektoren, die aus einer Vielzahl von Tripeln bestehen, zeigt die folgende Figur.

Fig. 6 zeigt ein Tripelarray 28, als Ausschnitt aus einem Kunststoffreflektor mit Fullcube-Tripeln. Über die Tripel sind streifenförmig zum Beispiel Folien mit diffraktiver Struktur 29 gelegt, oder bevorzugt ist die Lichteintrittsfläche des Reflektors direkt mit einer diffraktiven Struktur 29 versehen. Die diffraktiven Strukturen bedecken optimal 50% der Lichteintrittsfläche der Tripel. Aus Gründen der verständlicheren Darstellung sind das Tripelarray und die diffraktiven Strukturen versetzt dargestellt.

Der erfindungsgemäße Reflektor für die Projektion einer mittels einer diffraktiven Struktur erzeugten Projektionsfigur 24, wie in Fig. 4 gezeigt, wird also nach der in Fig. 5 dargelegten Regel mit optimal 50% seiner Lichteintrittsfläche bedeckt.

Fig. 7 zeigt ein Abdeckungsmuster für den Tripel. Neben der streifenförmigen Abdeckung sind auch andere Abdeckungsmuster für den einzelnen Tripel geeignet, zum Bespiel in Form eines Dreibalkenkreuzes, wie auf den Warnschildern für "Vorsicht Radioaktivität". Wie auch immer die Abdeckung des Tripels gestaltet wird, sollten alle sechs möglichen grundsätzlichen Lichtwege durch den Tripel so verlaufen, dass die diffraktive Struktur optimal nur einmal vom kohärenten Licht durchdrungen wird und dass jedem Abdeckungsteil ein freier Teil in Bezug über das Tripelzentrum gegenüberliegt.

Der Tripel 30 besteht aus den Spiegelteilflächen 31, 32, 33, 34 und 35, 36, wobei ein erstes Teilflächenpaar 31, 32 den ersten Spiegel, ein zweites Teilflächenpaar 33, 34 den zweiten Spiegel und ein drittes Teilflächenpaar 35, 36 den dritten Spiegel bildet.

Die Teilflächen 31, 33, 35 sind durch eine diffraktive Struktur auf der Lichteintrittsfläche abgedeckt, die Teilflächen 32, 34, 36 sind frei.

Zusammenfassend ist folgendes festzuhalten:

Eine Reflexionslichtschranke sendet Licht auf einen Reflektor. Der Reflektor antwortet nicht mit der Form des erhaltenen Lichtsignals, sondern antwortet mit einem Doppelsignal, das zwei Lichtzentren projiziert. Der Reflektor kann auch so beschaffen sein, dass er mit einer anderen geometrischen Figur als Lichtprojektion antwortet. Der Reflektor mit modifiziertem Signal ermöglicht ein Sensorsystem zu gestalten, das durch die Auswertung des vom Reflektor empfangenen Lichtsignals verifizieren kann, ob das empfangene Signal vom Reflektor oder von einer fremden Lichtquelle oder von einer fremden Reflexion stammt.

## Patentansprüche

1. Licht reflektierendes Tripel mit einer ersten, einer zweiten und einer dritten Spiegelfläche (1, 2, 3; 1 c, 2c, 3c), wobei seine Lichteintrittsfläche teilweise mit einem transparenten, ein Diffraktionsmuster aufweisenden Abdeckelement (25) bedeckt ist, **dadurch gekennzeichnet, dass** das Abdeckelement (25) die Hälfte der Lichteintrittsfläche bedeckt und dass einer abgedeckten Teilfläche des Tripels im Strahlengang eine nicht abgedeckte Teilfläche so gegenüberliegt, dass das Licht das Abdeckelement (25) höchstens einmal durchdringt.

2. Licht reflektierendes Tripel nach Anspruch 1, **dadurch gekennzeichnet, dass** die erste Spiegelfläche (1, 1 c) zur Hälfte und die dritte Spiegelfläche (3, 3c) vollständig durch das Abdeckelement (25) abgedeckt sind.

3. Licht reflektierendes Tripel nach Anspruch 2, **dadurch gekennzeichnet, dass** das Abdeckelement (25) eine mit der Kante zwischen der zweiten und der dritten Spiegelfläche (2, 3; 2c, 3c) deckungsgleiche Begrenzungslinie aufweist.

4. Licht reflektierendes Tripel nach Anspruch 1, **dadurch gekennzeichnet, dass** jede der Spiegelflächen (1, 2, 3; 1 c, 2c, 3c) zur Hälfte durch das Abdeckelement abgedeckt sind.

5. Licht reflektierendes Tripel nach einem der vorangehenden Ansprüche, **dadurch gekennzeichnet, dass** die erste und die zweite Spiegelfläche (1, 2; 1 c, 2c) sowie die erste und die dritte Spiegelfläche (1, 3; 1 c, 3c) aufeinander senkrecht stehen, dass die zweite und die dritte Spiegelfläche (2, 3; 2c, 3c) in einem von 90° verschiedenen Winkel zueinander angeordnet sind, und dass die zweite und die dritte Spiegelfläche (2, 3; 2c, 3c) identische Größe und Form aufweisen.

6. Licht reflektierendes Tripel nach einem der vorangehenden Ansprüche, **dadurch gekennzeichnet, dass** die zweite und die dritte Spiegelfläche (2, 3; 2c, 3c) jeweils quadratisch sind.

7. Licht reflektierendes Tripel nach einem der Ansprüche 5 oder 6, **dadurch gekennzeichnet, dass** die zweite und die dritte Spiegelfläche (2, 3; 2c, 3c) in einem Winkel zueinander angeordnet sind, der mindestens eine Minute und höchstens neun Grad vom rechten Winkel abweicht.

8. Licht reflektierendes Tripel nach einem der vorangehenden Ansprüche, **dadurch gekennzeichnet, dass** es aus Glas, wie Floatglas, Borosilikatglas oder Quarzglas, oder aus Kunststoff, wie Polymethylmethacrylat (PMMA), Polyvinylchlorid (PVC), Polycarbonat (PC) oder Styrol gefertigt ist.

9. Licht reflektierendes Tripel nach einem der Ansprüche 1 bis 7, **dadurch gekennzeichnet, dass** es aus Metall, wie Gold, Silber, Aluminium, Nickel, Messing, Kupfer, Bronze, Neusilber, Titan, Blei oder Stahl, oder durch Bedampfen eines formgebenden Tragekörpers aus Kunststoff, Glas oder Metall mit einem der vorgenannten Werkstoffe gefertigt ist.

10. Licht reflektierendes Tripel nach einem der vorangehenden Ansprüche, **dadurch gekennzeichnet, dass** es an seiner Lichteintrittsfläche einen Polarisationsfilter aufweist.

11. Reflektor mit einer Vielzahl von Licht reflektierenden Tripeln nach einem der vorangehenden Ansprüche.

12. Reflektor nach Anspruch 11, **dadurch gekennzeichnet, dass** die Tripelachsen der Licht reflektierenden Tripel in mindestens zwei verschiedenen Orientierungen angeordnet sind.

13. Reflektor nach Anspruch 11 oder 12, **dadurch gekennzeichnet, dass** die zweiten und die dritten Spiegelflächen (2, 3; 2c, 3c) in mindestens zwei verschiedenen Winkeln zueinander angeordnet sind.

14. Verfahren zur Erkennung eines mit einem Licht reflektierenden Tripel nach einem der Ansprüche 1 bis 10 oder einem Reflektor nach einem der Ansprüche 11 bis 13 versehenen Gegenstands, wobei mittels einer Lichtquelle ein Lichteingangssignal auf den Gegenstand gesandt wird und wobei mittels eines Detektors auf einer Lichtempfangsfläche (10; 23) ein reflektiertes Lichtausgangssignal erfasst und mit einem gespeicherten Sollsignal verglichen wird.

15. Verfahren nach Anspruch 14, **dadurch gekennzeichnet, dass** der Gegenstand als erkannt gilt, wenn das Lichtausgangssignal mit dem Sollsignal übereinstimmt.

16. Verfahren nach Anspruch 14, **dadurch gekennzeichnet, dass** der Gegenstand als erkannt gilt, wenn das Lichtausgangssignal mit dem Sollsignal übereinstimmt und ein weiteres gespeichertes Sollsignal nicht erfasst wird.

## Claims

1. Light reflecting triple prism with a first, a second and a third reflector surface (1, 2, 3; 1c, 2c, 3c), wherein its light incident surface is partly covered with a transparent cover element (25) comprising a diffraction pattern, **characterized in that** the cover element (25) covers half the light incident surface, and **in that** a non-covered partial surface faces a covered partial surface of the triple prism in the beam path such that the light penetrates the cover element (25) once at the most.

2. Light reflecting triple prism according to Claim 1, **characterized in that** the first reflector surface (1, 1c) is half covered and the third reflector surface (3, 3c) is completely covered by the cover element (25).

3. Light reflecting triple prism according to Claim 2, **characterized in that** the cover element (25) has a border line congruent with the edge between the second and the third reflector surface (2, 3; 2c, 3c).

4. Light reflecting triple prism according to Claim 1, **characterized in that** each of the reflector surfaces (1, 2, 3, 1c, 2c, 3c) are half covered by the cover element.

5. Light reflecting triple prism according to any one of the preceding claims, **characterized in that** the first and the second reflector surface (1, 2; 1 c, 2c) as well as the first and the third reflector surface (1, 3; 1c, 3c) are perpendicular to one another, **in that** the second and the third reflector surface (2, 3; 2c, 3c) are arranged at an angle different by 90 ° to one another, and **in that** the second and the third reflector surface (2, 3; 2c, 3c) are of identical size and shape.

6. Light reflecting triple prism according to any one of the preceding claims, **characterized in that** the second and the third reflector surface (2, 3; 2c, 3c) are each square.

7. Light reflecting triple prism according to either of Claims 5 and 6, **characterized in that** the second and the third reflector surface (2, 3; 2c, 3c) are arranged at an angle to one another, which deviates at least one minute and at most nine degrees from the right angle.

8. Light reflecting triple prism according to any one of the preceding claims, **characterized in that** it is made from glass, such as float glass, borosilicate glass or quartz glass, or from plastic, such as polymethylmethacrylate (PMMA), polyvinyl chloride (PVC), polycarbonate (PC) or styrene.

9. Light reflecting triple prism according to any one of Claims 1 to 7, **characterized in that** it is made of metal, such as gold, silver, aluminium, nickel, brass, copper, bronze, German silver, titanium, lead or steel, or by vapour deposition of a form-giving support structure made from plastic, glass or metal with one of the aforementioned materials.

10. Light reflecting triple prism according to any one of the preceding claims, **characterized in that** it has a polarisation filter on its light incident surface.

11. Reflector with a plurality of light reflecting triple prisms according to any one of the preceding claims.

12. Reflector according to Claim 11, **characterized in that** the triple prism axes of the light reflecting triple prisms are arranged in at least two different orientations.

13. Reflector according to Claim 11 or 12, **characterized in that** the second and the third reflector surfaces (2, 3; 2c, 3c) are arranged at at least two different angles to one another.

14. Method for recognizing an object provided with a light reflecting triple prism according to any one of Claims 1 to 10 or a reflector according to any one of Claims 11 to 13, wherein by means of a light source a light incident signal is sent to the object, and wherein by means of a detector a reflected light output signal is captured on a light receptive surface (10; 23) and compared with a stored target signal.

15. Method according to Claim 14, **characterized in that** the object is considered to be recognized, if the light output signal matches the target signal.

16. Method according to Claim 14, **characterized in that** the object is considered to be recognized, if the light output signal matches the target signal and a further stored target signal is not captured.

## Revendications

1. Prisme triple réfléchissant la lumière comportant une première, une deuxième et une troisième surface réfléchissante (1, 2, 3 ; 1c, 2c, 3c), dont la surface d'entrée de lumière est partiellement recouverte par un élément de recouvrement transparent (25) présentant un motif de diffraction, **caractérisé en ce que** l'élément de recouvrement (25) recouvre la moitié de la surface d'entrée de lumière et qu'à une surface partielle recouverte du prisme triple fait face, dans le chemin optique, une surface partielle non recouverte de manière que la lumière traverse au maximum une fois l'élément de recouvrement (25).

2. Prisme triple réfléchissant la lumière selon la revendication 1, **caractérisé en ce que** la première surface réfléchissante (1, 1c) est recouverte à moitié et la troisième surface réfléchissante (3, 3c) recouverte entièrement par l'élément de recouvrement (25).

3. Prisme triple réfléchissant la lumière selon la revendication 2, **caractérisé en ce que** l'élément de recouvrement (25) présente une ligne de délimitation qui coïncide avec l'arête entre la deuxième et la troisième surface réfléchissante (2, 3 ; 2c, 3c).

4. Prisme triple réfléchissant la lumière selon la revendication 1, **caractérisé en ce que** chacune des surfaces réfléchissantes (1, 2, 3 ; 1c, 2c, 3c) est recouverte à moitié par l'élément de recouvrement.

5. Prisme triple réfléchissant la lumière selon l'une des revendications précédentes, **caractérisé en ce que** la première et la deuxième surface réfléchissante (1, 2 ; 1c, 2c) ainsi que la première et la troisième surface réfléchissante (1, 3 ; 1c, 3c) sont perpendiculaires l'une à l'autre, que la deuxième et la troisième surface réfléchissante (2, 3 ; 2c, 3c) sont disposées l'une par rapport à l'autre à un angle différent de 90°, et que la deuxième et la troisième surface réfléchissante (2, 3 ; 2c, 3c) présentent une taille et une forme identiques.

6. Prisme triple réfléchissant la lumière selon l'une des revendications précédentes, **caractérisé en ce que** la deuxième et la troisième surface réfléchissante (2, 3 ; 2c, 3c) sont carrées.

7. Prisme triple réfléchissant la lumière selon l'une des revendications 5 ou 6, **caractérisé en ce que** la deuxième et la troisième surface réfléchissante (2, 3 ; 2c, 3c) sont disposées l'une par rapport à l'autre à un angle qui diffère d'au moins une minute et au plus de neuf degrés de l'angle droit.

8. Prisme triple réfléchissant la lumière selon l'une des revendications précédentes, **caractérisé en ce qu'**il est réalisé en verre, comme en verre flotté, verre de borosilicate ou verre de quartz, ou en matière plastique, tel que le polyméthylméthacrylate (PMMA), le chlorure de polyvinyle (PVC), le polycarbonate (PC) ou le styrène.

9. Prisme triple réfléchissant la lumière selon l'une des revendications 1 à 7, **caractérisé en ce qu'**il est réalisé en un métal, tel que l'or, l'argent, l'aluminium, le nickel, le laiton, le cuivre, le bronze, l'argentan, le titane, le plomb ou l'acier, ou par métallisation d'un corps porteur donneur de forme en matière plastique, verre ou métal avec un des matériaux précités.

10. Prisme triple réfléchissant la lumière selon l'une des revendications précédentes, **caractérisé en ce qu'**il présente un filtre polarisant sur sa surface d'entrée de lumière.

11. Réflecteur comportant une pluralité de prismes triples réfléchissant la lumière selon l'une des revendications précédentes.

12. Réflecteur selon la revendication 11, **caractérisé en ce que** les axes de prisme triple des prismes triples réfléchissant la lumière sont disposés dans au moins deux orientations différentes.

13. Réflecteur selon la revendication 11 ou 12, **caractérisé en ce que** les deuxième et troisième surfaces réfléchissantes (2, 3 ; 2c, 3c) sont disposées à au moins deux angles différents l'une par rapport à l'autre.

14. Procédé d'identification d'un objet muni d'un prisme triple réfléchissant la lumière selon l'une des revendications 1 à 10 ou d'un réflecteur selon l'une des revendications 11 à 13, dans lequel un signal d'entrée de lumière est envoyé sur l'objet au moyen d'une source lumineuse et dans lequel un signal de sortie de lumière réfléchi est saisi sur une surface de réception de lumière (10 ; 23) au moyen d'un détecteur et comparé avec un signal de consigne enregistré.

15. Procédé selon la revendication 14, **caractérisé en ce que** l'objet est considéré comme identifié quand le signal de sortie de lumière coïncide avec le signal de consigne.

16. Procédé selon la revendication 14, **caractérisé en ce que** l'objet est considéré comme identifié quand le signal de sortie de lumière coïncide avec le signal de consigne et qu'un autre signal de consigne enregistré n'est pas saisi.
